(19) Europäisches Patentamt
European Patent Office
Office européen des brevets

(11) **EP 1 331 444 B1**

(12) **EUROPÄISCHE PATENTSCHRIFT**

(45) Veröffentlichungstag und Bekanntmachung des Hinweises auf die Patenterteilung:
**22.08.2012 Patentblatt 2012/34**

(51) Int Cl.:
*F23N 1/02* *(2006.01)*    *F23N 5/00* *(2006.01)*
*F23N 5/12* *(2006.01)*

(21) Anmeldenummer: **03000375.0**

(22) Anmeldetag: **10.01.2003**

(54) **Verfahren zur Regelung eines Gasbrenners**

Method for regulating a gas burner

Méthode de régulation d'un brûleur à gaz

(84) Benannte Vertragsstaaten:
**AT BE BG CH CY CZ DE DK EE ES FI FR GB GR HU IE IT LI LU MC NL PT SE SI SK TR**

(30) Priorität: **17.01.2002 AT 682002**

(43) Veröffentlichungstag der Anmeldung:
**30.07.2003 Patentblatt 2003/31**

(73) Patentinhaber: **Vaillant GmbH**
**42859 Remscheid (DE)**

(72) Erfinder:
• **Bomscheuer, Walter**
**45239 Essen (DE)**
• **Klepka, Michael**
**42369 Wuppertal (DE)**
• **Richter, Klaus**
**42853 Remscheid (DE)**

(74) Vertreter: **Hocker, Thomas**
**Vaillant GmbH**
**Berghauser Strasse 40**
**42859 Remscheid (DE)**

(56) Entgegenhaltungen:
**EP-A- 0 833 106     DE-A- 19 941 978**
**DE-C- 19 539 568    US-A- 5 190 454**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Regelung eines Gasbrenners, insbesondere bei Heizungsanlagen mit Gebläse.

Bei Heizungsanlagen mit Gebläse gemäß dem Stand der Technik wird mittels einer Gasarmatur die Brenngasmenge an die Luftmenge angepaßt. Hierzu wird der Luftmassenstrom meist mittels des Druckabfalls an einer Blende gemessen und über diesen Steuerdruck die Brenngasmenge gesteuert. Dieses Verfahren zur Mischung von Brenngas und Luft hat den Nachteil, dass aufgrund wechselnder Brenngaszusammensetzung der Luftüberschuss variieren kann; hierdurch kann es zu hohen Schadstoffemissionen während des Betriebs und Startschwierigkeiten kommen.

Aus der EP 770 824 B1 und DE 19539568C1 ist bekannt, dass das Brenngas-Luft-Gemisch dadurch geregelt werden kann, dass der Ionisationsstrom, der vom Luftüberschuss abhängig ist und bei stöchiometrischer Verbrennung sein Maximum aufweist, gemessen wird und das Gemisch in Abhängigkeit von dem Ionisationsstromsignal verändert werden kann. Hierbei besteht das Problem, das ein relativ kleines Signal sehr genau gemessen werden muss.

Bei einem Verfahren zur Regelung des Brenngas-Luft-Gemischs gemäß EP 833 106 befindet sich ein Flammenfühler nahe einer Brennerplatte. Durch das Erhöhen des Luftüberschusses wird ein Abheben der Flamme bewirkt, wodurch ein grobes Maß für den Luftüberschuss gegeben ist.

Ebenfalls bekannt ist ein Verfahren, bei dem der Sauerstoffanteil im Abgas eines Gasbrenners gemessen wird und das Brenngas-Luft-Gemisch derart geregelt wird, dass sich ein bestimmter Sauerstoffanteil im Abgas ergibt. Ein solches Verfahren wird zum Beispiel in US 5 190 454 beschrieben. Hierzu ist zu bemerken, dass Sauerstoffsensoren, welche über Jahre hinweg einen Sauerstoffüberschuss präzise messen, nicht zum Stand der Technik gehören und das Meßsignal sich im Arbeitsbereich nur wenig ändert.

Der Erfindung liegt die Aufgabe zugrunde, ein robustes Verfahren zur Regelung eines Gasverbrennungsanlage zu schaffen, bei dem das Brenngas-Luft-Verhältnis derart geregelt wird, dass ein sicheres Zünden und niedrige Schadstoffemissionen gewährleistet sind. Hierzu soll ein deutlich zu messendes Signal verwendet werden. Bei bekannten Verfahren sind die Abweichungen der zu messenden Signalwerte sehr klein, wodurch es häufig - insbesondere bei gealterten Sensoren - zu fehlerbehafteten Messungen und Regelungen kommt.

Ziel der Erfindung ist es, diesen Nachteile zu vermeiden und ein eindeutiges, robustes Regelverfahren für einen Gasbrenner zu schaffen.

Erfindungsgemäß wird dies bei Verfahren der eingangs erwähnten Art durch die kennzeichnenden Merkmale des unabhängigen Anspruches erreicht.

Durch die vorgeschlagenen Maßnahmen wird erreicht, dass von Zeit zu Zeit eine Kalibrierung des Brenngas-Luft-Verbundes stattfindet, bei dem das Mischungsverhältnis derart eingestellt wird, dass eine saubere und sichere Verbrennung gewährleistet ist.

Ein weiterer Vorteil des erfindungsgemäßen Verfahrens ist die geringere Leistungsaufnahme des Gebläses, da der Druckverlust für die Volumenstrommessung überflüssig wird. Hierdurch reduzieren sich auch die Gebläsegeräusche und ein kleineres, in der Regel kostengünstigeres Gebläse kann verwendet werden. Es ist nicht mehr notwendig durch unterschiedliche Bauteile zwischen Erdgas H, Erdgas L und Flüssiggas zu unterscheiden; hier genügt eine entsprechende Standardvorgabe für die Regelung, damit der Brenner gestartet werden kann. Gemäß den optionalen Merkmalen kann eine vorteilhafter Schwellwert für den Kalibriervorgang bestimmt werden.

Die Merkmale der Ansprüche 2 und 3 beschreiben vorteilhafte Verfahrensschritte zur Durchführung des Verfahrens. So kann das Brenngas-Luft-Gemisch angefettet werden, indem man die Brenngasmenge erhöht oder die Luftmenge reduziert. Zur Abmagerung des Gemischs kann die Brenngasmenge reduziert oder die Luftmenge erhöht werden. Es ist vorstellbar, dass bei dem Verfahren sowohl die Brenngas-, als auch Luftmenge verändert wird.

Gemäß den Merkmalen des Anspruchs 4 ergibt sich der Vorteil, dass das Kalibrierverfahren auch dann - außerhalb der vorgesehenen Zyklen - durchgeführt werden kann, wenn eine ungewöhnlich hohe Kohlenmonoxid- beziehungsweise Kohlenwasserstoffkonzentration vorliegt. So ist es beispielsweise denkbar, dass sich kurz nach einer Kalibrierung aufgrund einer Flüssiggas-Luft-Zumischung das Brenngas-Luft-Verhältnis signifikant ändert und eine hohe Kohlenmonoxid- beziehungsweise Kohlenwasserstoffkonzentration im Abgas entsteht. Gemäß den Merkmalen des Anspruchs 5 liegen auch vor der erstmaligen Durchführung des installierten Gasbrenners Sollwerte vor, so dass der Brenner bis zur Durchführung der ersten Kalibrierung mit diesen Werten betrieben werden kann.

Gemäß den Merkmalen des Anspruchs 6 ergibt sich der Vorteil, dass die Funktion des Abgassensors überprüft werden kann. Zum angegebenen Zeitpunkt sollte nur Luft am Abgassensor vorliegen. Wird dagegen Kohlenmonoxid beziehungsweise Kohlenwasserstoffe in nennenswerter Höhe gemessen, so ist dies ein Indiz dafür, dass ein Sensorfehler vorliegt; statt eine Kalibrierung mit einem defekten Sensor durchzuführen, sollten dann besser die bisherigen Sollwerte Verwendung finden.

Gemäß den Merkmalen des Anspruchs 7 ergibt sich der Vorteil, dass die Funktion des Abgassensors auch beim Abschalten des Brenners überprüft werden kann. Zum Zeitpunkt des Abschaltens kann es kurzzeitig zu einer leichten Erhöhung des Signalwertes kommen. Kurz nach dem Abschalten sollte nur Luft am Abgassensor vorliegen. Wird dagegen Kohlenmonoxid in nennenswerter Höhe gemessen, so ist dies ein Indiz dafür, dass ein Sensorfehler vorliegt.

Gemäß Anspruch 8 kann festgestellt werden, ob der Sensor während des Betriebs plausible Werte liefert oder ob der Sensor wahrscheinlich defekt ist. Bei Vorliegen eines Defektes wird der Brenner mit in der Regelung hinterlegten Standardwerten oder in einem früheren Kalibrierverfahren ermittelten Werten betrieben oder eine Störabschaltung veranlaßt.

Gemäß den Merkmalen des Anspruchs 9 ergibt sich der Vorteil, dass redundant mittels Kohlenmonoxid- oder Kohlenwasserstoff- und Ionisationsstrommessung festgestellt werden kann, ob das System in Ordnung ist. Stellt das System fest, dass ein Widerspruch stattfindet, so wird die Kalibirerung abgebrochen und die Regelung verwendet die alten Sollwerte.

Gemäß den Merkmalen des Anspruchs 10 ergibt sich der Vorteil, dass angesichts der widersprüchlichen Informationen, eine Störabschaltung erfolgt und somit eine Gefährdung ausgeschlossen ist.

Durch die Merkmale des Anspruchs 11 ergeben sich weitere Anhaltspunkte für einen Defekt. Der Ionisationsstrom hat bei nahstöchiometrischer Verbrennung sein Maximum. Fällt der Ionisationsstrom bei Anfettung, so ist die Verbrennung unterstöchiometrisch; der Schwellwert hätte in diesem Falle längst erreicht sein müssen.

Gemäß den Merkmalen des Anspruchs 12 wird in beiden letztgenannten Fällen der Brenner abgeschaltet, um eine unsaubere Verbrennung zu vermeiden.

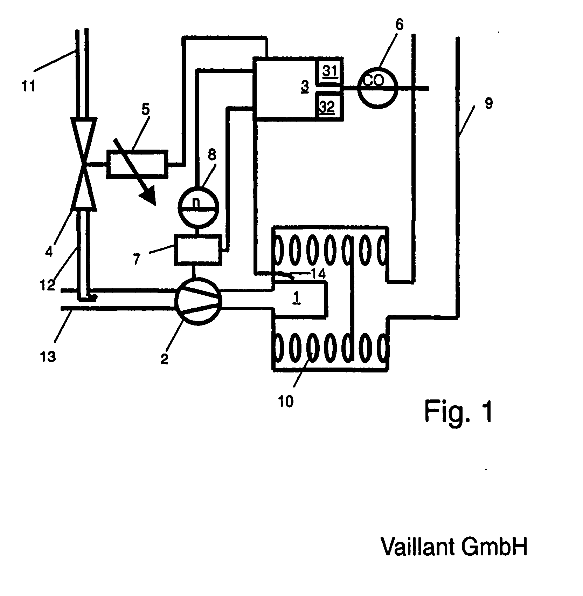

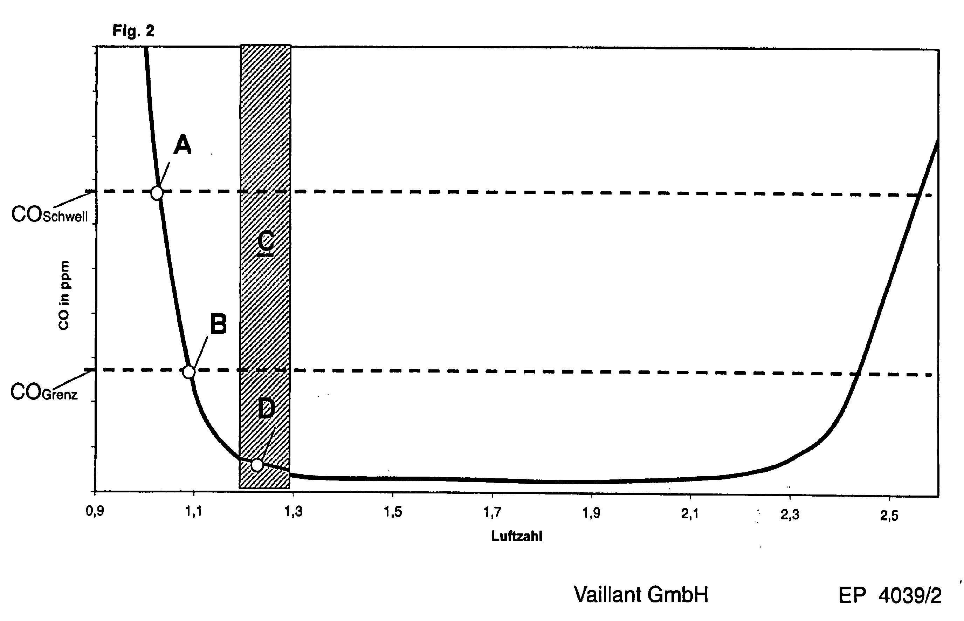

Die Erfindung wird im Folgenden anhand der Fig. 1 und 2 der Zeichnungen erläutert. Es zeigen:

Fig. 1 ein Heizungsanlage zur Durchführung des erfindungsgemäßes Verfahrens und

Fig. 2 den Zusammenhang zwischen Luftüberschuß und Kohlenmonoxidemission.

Eine Heizungsanlage gemäß Fig. 1 verfügt über einen Brenner 1 mit einem diesen umgebenden Wärmeaustauscher 10, an den sich ein Abgasrohr 9, in dem sich ein Abgassensor 6 befindet, anschließt. Dem Brenner 1 ist ein Gebläse 2 vorgeschaltet. Auf der Eingangsseite des Gebläses 2 befindet sich eine Luftansaugleitung 13, in die auch eine Brenngasleitung 12, die durch ein Gasventil 4 von der Brenngaszuführung 11 getrennt ist, reicht. Das Gasventil 4 verfügt über einen Stellantrieb 5. Das Gebläse 2 verfügt über einen Antriebsmotor 7 mit Drehzahlerfassung 8. Stellantrieb 5, Antriebsmotor 7, Drehzahlerfassung 8 und Abgassensor 6 sind mit einer Regelung 3, die über ein Speichermodul 31 und Rechenmodul 32 verfügt, verbunden. Ebenfalls mit der Regelung ist eine Ionisationselektrode 14, die knapp oberhalb des Brenners 1 positioniert ist, verbunden.

Beim Brennerbetrieb wird von der Regelung 3 z.B. aufgrund eines nicht dargestellten Raumthermostaten in Verbindung mit einer ebenfalls nicht dargestellten Vorlauftemperaturerfassung im Rechenmodul 32 eine Sollleistung des Brenners 1 berechnet. Im Speichermodul 31 ist zu der Sollleistung ein Sollsignal für die Brenngas- und Luftmenge hinterlegt. Mit diesen Sollsignalen wird das Gebläse 2 mit seinem Antriebsmotor 7 und seiner Drehzahlerfassung sowie das Gasventil 4 mit seinem Stellantrieb 5 angesteuert, wodurch ein Brenngas-Luft-Gemisch in das Gebläse 2 und von dort zum Brenner 1 strömt. Das Gemisch wird an der äußeren Oberfläche des Brenners 1 verbrannt, durchströmt den Wärmeaustauscher 10 und strömt anschließend durch das Abgasrohr 9 ins Freie.

Fig. 2 zeigt den Zusammenhang zwischen Kohlenmoxidkonzentration und Verbrennungsluftverhältnis λ. Um eine vollständige Verbrennung zu erreichen, ist theoretisch ein Verbrennungsluftverhältnis λ von 1,0 notwendig.

$$\lambda = \frac{m_L}{m_{L,min}}$$

Hierbei ist $m_L$ die tatsächliche Luftmenge und $m_{L,min}$ die stöchiometrische Luftmenge. Bei der Verbrennung von Kohlenwasserstoffen zu Kohlendioxid entsteht stets Kohlenmonoxid als Zwischenprodukt. Aufgrund der begrenzten Reaktionszeit in der wärmebeeinflußten Zone und eine unzureichende Durchmischung von Brenngas und Luft, ist in der Praxis jedoch ein gewisser Luftüberschuss notwendig, um einen vollständigen Ausbrand zu gewährleisten. Daher hat man in der Regel bei knapp überstöchiometrischer Verbrennung einen CO-Wert von weit über 1000 ppm. Erst bei einem Luftüberschuß von ca. 10 % fallen die Kohlenmonoxid-Emissionen im ausreagierten Abgas deutlich und erreichen bei üblichen Brennern Werte unter 100 ppm. Mit Erhöhung der Luftzahl fällt jedoch — aufgrund des Anteils inerter Gase — die Verbrennungstemperatur; die Verbrennungsreaktion wird verlangsamt und es kommt zum Abbruch der Reaktion am Wärmeaustauscher. Daher ist ab einem Luftüberschuss von ca. 80 % ein deutlicher Anstieg der Kohlenmonoxidemissionen zu verzeichnen.

Da bei stöchiometrischer Verbrennung (theoretisch) der gesamte Brennstoff verbrannt wird und keine überschüssige Luft vorhanden ist, ist hierbei die Verbrennungstemperatur maximal. Mit überschüssiger Luft wird der Anteil der Inertgase erhöht, wodurch die Verbrennungstemperatur sinkt. Dies hat zur Folge, dass die Stickoxidemissionen bei stöchiometrischer Verbrennung maximal sind und bei Erhöhung des Luftüberschusses abnehmen. Auch der Wirkungsgrad einer Heizungsanlage ist bei stöchiometrischer Verbrennung maximal und nimmt bei Erhöhung des Luftüberschusses ab, da die inerten Gase Wärmeverluste aufnehmen und die Verweilzeit des Abgases im Wärmeaustauscher aufgrund der erhöhten Strömungsgeschwindigkeit reduziert wird, was auch durch den verbesserten Wärmeübergang nicht kompensiert wird. Es ist jedoch zu berücksichtigen, dass es sowohl bei nahstöchiometrischer Verbrennung, als auch bei sehr großen Luftüberschüssen zu einer Rußbildung kommen kann; diese verschlechtert den Wärmeübergang am Wärmeaustauscher.

Oben genannte Tatsachen haben zur Folge, dass Gasbrenner bevorzugt mit einem definierten Luftüberschuss betrieben werden. Im Ausführungsbeispiel wird daher von einer Sollluftzahl von ca. 1,25 ausgegangen. In Fig. 2 entspricht dies dem Punkt D, der in einem Sollbereich C liegt.

Bei der Verbrennung gilt:

$$\dot{V}_{Luft} = l_{min} * \lambda * \dot{V}_{Brenngas}$$

Hierbei ist $l_{min}$ der Mindestluftbedarf. Da bei einem realen Brennersystem das Verhältnis von Brenngas zu Luft über den gesamten Modulationsbereich nicht konstant sein muss, ergibt sich eine Abhängigkeit

$$\dot{m}_{Luft} = f(P) * \dot{m}_{Brenngas}$$

f(P) ist hierbei die leistungsabhängige Verhältnisfunktion, die fast linear ist, zwischen Brenngas und Luft.

Zu Beginn der Kalibrierung liegt ein beliebiges Brenngas-Luft-Verhältnis vor. Die Regelung 3 steuert kontinuierlich den Stellantrieb 5 des Gasventils 4 derartig, dass stetig mehr Brenngas bei gleicher Luftmenge in das Gebläse 2 gelangt. Hierdurch wird das Gemisch angefettet; die Luftzahl sinkt. Der Abgassensor 6 mißt die Kohlenmonoxidemission im Abgasrohr 9 und leitet das Signal an die Regelung 3 weiter. Registriert die Regelung 3, dass die Kohlenmonoxidemission einen im Speichermodul 31 vorgegebenen Schwellwert von 2000 ppm (Punkt A in Fig. 2) überschritten hat, so wird das Gemisch nicht weiter angefettet. Es ist bekannt, dass derartige Kohlenmonoxidemissionen bei einer Luftzahl von ca. 1,08 erreicht werden. Demnach ist es das Ziel die Luftzahl um 0,17 zu erhöhen, um die Sollluftzahl von 1,25 zu erreichen. Der Regelung 3 ist die Drehzahl des Gebläses 2 von dem Drehzahlsensor 8 des Antriebsmotors 7 und die Stellung des Gasventils 4 (beispielsweise über die Taktung des Stellantriebes 5 in Form der Pulsweitenmodulation) bekannt. Diese Daten werden im Speichermodul abgelegt. Durch den Vergleich dieser Daten mit ebenfalls im Speichermodul 31 abgelegten Referenzwerten im Rechenmodul 32 wird ein Korrekturfaktor k festgelegt. Hieraus ergibt sich, dass die Regelung 3 im folgenden bedarfsabhängigen Betrieb das Brenngas-Luft-Verhältnis gemäß der Beziehung

$$\dot{m}_{Luft}(P) = f(P) * \dot{m}_{Brenngas}(P) * k$$

bestimmt. Dieser Kalibriervorgang wird in festen Zyklen durchfahren.

Aufgrund des relativ großen Sollbereichs (C in Fig. 2) muss die Messung und Regelung nicht einer besonderen Genauigkeit genügen. So ist es unproblematisch, wenn beispielsweise statt 2000 ppm 4000 ppm gemessen werden, da die Differenz beim Luftüberschuss für beide Kohlenmonoxidemissionen minimal sind. Auch die Abmagerung des Gemisches kann in einem relativ großen Toleranzband erfolgen. Es ist bekannt, dass handelsübliche Brenner, die mit Lambda 1,25 betrieben werden sollen, in einem Bereich zwischen 1,20 und 1,30 problemlos betrieben werden können. Es ist wiederum sehr leicht möglich das Gemisch derart abzumagern, dass man mit hinreichender Sicherheit diesen Bereich ansteuert.

Es kann vorkommen, dass beispielsweise durch Flüssiggas-Luft-Beimischung im Winter das Brenngas-Luft-Verhältnis sich binnen Minuten ändert. Eine unsaubere Verbrennung würde so erst bei der nächsten routinemäßigen Kalibrierung korrigiert, evtl. sogar gänzlich unberücksichtigt bleiben, da zum Zeitpunkt der nächsten Kalibrierung wieder das ursprüngliche Gemisch vorläge. Um dies zu verhindern, mißt der Abgassensor 6 auch außerhalb der routinemäßigen Kalibrierung in bestimmten Abständen die Kohlenmonoxidemission im Abgasrohr 9. Ist ein bestimmter Grenzwert (Punkt B in Fig. 2) überschritten, so wird eine Kalibrierung von der Regelung 3 eingeleitet.

Optional kann bei der Kalibrierung zur Veränderung des Gemischs in Richtung brennstoffreicherer Zusammensetzung statt einer Erhöhung der Brenngasmenge auch die Luftmenge reduziert werden, während die Gasmenge konstant bleibt. Auch kann statt eines absoluten Kohlenmonoxidsignals ein Gradient (z.B. CO-Änderung pro Drehzahländerung des Gebläses) gemessen werden. Der Schwellwert muss nicht einem bestimmten CO-äquivalenten Signal entsprechen, sondern kann z.B. auch gemäß Grundrauschen ohne CO (z.B. 20 mV) plus Abschaltwert (z.B. 0,5 V) bestimmt werden. In diesem Fall würde man voraussetzen, dass das Messsignal bei Kohlenmonoxidkonzentrationen im angestrebten Betriebsbereich sich deutlich unter diesem Schwellwert befinden und der Schwellwert ein Indiz dafür ist, dass ein bestimmtes Brenngas-Luft-Verhältnis in Richtung brennstoffreicherem Gemisch unterschritten wurde.

Eine weitere Variante des erfindungsgemäßen Verfahrens besteht darin, dass die Kalibrierung nicht durch eine Anfettung des Gemischs bis zu einem Schwellwert und anschließende Abmagerung geschieht, sondern vielmehr durch eine Abmagerung des Gemischs bis zu einem Schwellwert und anschließende Anfettung. Hierbei wird berücksichtigt, dass — wie aus Fig. 2 ersichtlich — auch bei sehr brennstoffarmen Gemischen die Kohlenmonoxid-Emissionen ansteigen. Während bei dem Kohlenmonoxidanstieg bei brennstoffreichen Gemischen der Beginn des steilen Anstiegs bei nahezu allen Brennern im gleichen λ-Bereich liegt, ist der steile Anstieg bei brennstoffarmen Gemischen sehr brennerspezifisch. Dies gilt sowohl für den Beginn des Anstiegs, als auch für den Gradienten ($\Delta$ CO / $\Delta$ λ).

Es ist ferner bekannt, dass sich im Abgas die Emissionen an unverbrannten Kohlenwasserstoffen in der gleicher Art verhalten wie die Kohlenmonoxid-Emissionen. Daher kann bei dem erfindungsgemäßen Verfahren auch ein Sensor verwendet werden, der ein den unverbrannten Kohlenwasserstoffen äquivalentes Signal erzeugt.

## Patentansprüche

1. Verfahren zur Regelung eines Gasbrenners (1), insbesondere mit Gebläse (2), mit einer elektronischen Regelung (3), welche zu einer vorgegebenen Brennerleistung ein Sollsignal für die Brenngasmenge und die Luftmenge vorgibt, einer Einrichtung zur Regelung der Brenngasmenge (4, 5) und einem Abgassensor (6), der ein der Kohlenmonoxid-Konzentration oder Konzentration an unverbrannten Kohlenwasserstoffen äquivalentes Signal erzeugt, **dadurch gekennzeichnet, dass** nach einer gewissen Betriebszeit oder in periodischen Abständen, vorzugsweise Brennerstarts oder Absolutzeit, ein Kalibrierungsvorgang durchfahren wird, in dem das Brenngas-Luft-Gemisch angefettet beziehungsweise abgemagert wird bis das signal des Abgassensors (6) ein Gradientes dieses Signals vorzugsweise abgeleitet nach der Gebläsedrehzahl oder dem Steuersignal der Einrichtung zur Regelung der Brenngasmenge (4, 5) einem vorgegebenen oder errechneten Schweilwert überschreitet wodurch bekannt ist dass eine bestimmte

Luftzahl vorliegt, zu diesem Zustand das Signal für die Brenngasmenge und die Luftmenge erfaßt wird und anschließend das Brenngas-Luft-Gemisch wieder in einem vorgegebenen Verhältnis abgemagert beziehungsweise angefettet wird, wodurch neue Sollwerte für die Brenngasmenge und Luftmenge vorgegeben werden.

2. Verfahren zur Regelung eines Gasbrenners (1) gemäß Anspruch 1, **dadurch gekennzeichnet, dass** die Anfettung und / oder Abmagerung des Brenngas-Luft-Gemischs durch Veränderung des Steuersignals für die Brenngasmenge geschieht.

3. Verfahren zur Regelung eines Gasbrenners (1) gemäß einem der Ansprüche 1 oder 2, **dadurch gekennzeichnet, dass** die Anfettung und / oder Abmagerung des Brenngas-Luft-Gemischs durch Veränderung des Steuersignals für die Luftmenge geschieht.

4. Verfahren zur Regelung eines Gasbrenners (1) gemäß einem der Ansprüche 1 bis 3, **dadurch gekennzeichnet, dass** der Kalibriervorgang eingeleitet wird, wenn das der Kohlenmonoxid- beziehungsweise Kohlenwasserstoff-Konzentration äquivalente Signal während des Betriebs des Gasbrenners mindestens 15 Sekunden nach dem Brennerstart oberhalb eines vorgegebenen Grenzwertes liegt.

5. Verfahren zur Regelung eines Gasbrenners (1) gemäß einem der Ansprüche 1 bis 4, **dadurch gekennzeichnet, dass** zu Beginn des Verfahrens der Regelung (3) Sollwerte für Brenngas und Luft vorgegeben werden.

6. Verfahren zur Regelung eines Gasbrenners (1) gemäß einem der Ansprüche 1 bis 5, **dadurch gekennzeichnet, dass** vor dem Brennerstart, vorzugsweise mindestens 5 Sekunden nach dem Gebläsestart, das Kohlenmonoxid-Konzentration oder Konzentration an unverbrannten Kohlenwasserstoffen äquivalente Signal erfaßt wird und bei Vorliegen eines Signals, das einer Konzentration größer vorzugsweise 20 ppm entspricht, der Kalibriervorgang unterdrückt wird.

7. Verfahren zur Regelung eines Gasbrenners (1) gemäß einem der Ansprüche 1 bis 6, **dadurch gekennzeichnet, dass** nach dem Abschalten der Brenngaszufuhr, vorzugsweise nach einer kurzen Meßpause, vorzugsweise 1 Sekunde, das der Kohlenmonoxid-Konzentration oder der Konzentration an unverbrannten Kohlenwasserstoffen äquivalente Signal erfaßt wird und bei Vorliegen eines Signals, das einer Konzentration größer vorzugsweise 20 ppm entspricht, der Kalibriervorgang unterdrückt wird.

8. Verfahren zur Regelung eines Gasbrenners (1) gemäß einem der Ansprüche 1 bis 7, **dadurch gekennzeichnet, dass** beim Vorliegen eines Signals des Abgassensor (6) das kleiner ist als ein vorgegebener Schwellwert, vorzugsweise 10 mV oder größer ist als ein anderer vorgegebener Schwellwert, vorzugsweise 1 V, oder beim Vorliegen einer Gradienten dieses Signals welcher größer ist als ein dritter Schwellwert, vorzugsweise 100 mV/sec, der Kalibriervorgang unterdrückt wird und die Regelung (3) den Gasbrenner (1) mit vorgegebenen Standardwerten oder in einem vorherigen Kalibrierverfahren ermittelten Werten regelt oder die Regelung (3) den Gasbrenner (1) abschaltet.

9. Verfahren zur Regelung eines Gasbrenners (1) gemäß einem der Ansprüche 1 bis 8, **dadurch gekennzeichnet, dass** zusätzlich der Ionisationsstrom an einer im Flammenbereich befindlichen Ionisationselektrode (14) aufgenommen wird und in dem Falle, in dem bei brennstoffreichem Brenngas-Luft-Gemisch der Ionisationsstrom ansteigt während das Kohlenmonoxid beziehungsweise Kohlenwasserstoff äquivalente Signal abfällt, der Kalibriervorgang abgebrochen wird.

**10.** Verfahren zur Regelung eines Gasbrenners (1) gemäß Anspruch 9, **dadurch gekennzeichnet, dass** der Brenner (1) abgeschaltet wird.

**11.** Verfahren zur Regelung eines Gasbrenners (1) gemäß einem der Ansprüche 1 bis 10, **dadurch gekennzeichnet, dass** zusätzlich der Ionisationsstrom an einer im Flammenbereich befindlichen Ionisationselektrode (14) aufgenommen wird und in dem Falle, in dem bei brennstoffreichem Brenngas-Luft-Gemisch der Ionisationsstrom abfällt während der Schwellwert für das Kohlenmonoxid beziehungsweise Kohlenwasserstoff äquivalente Signal nicht erreicht ist, der Kalibriervorgang abgebrochen wird.

**12.** Verfahren zur Regelung eines Gasbrenners (1) gemäß Anspruch 9 oder 11, **dadurch gekennzeichnet, dass** die Regelung (3) die Einrichtung zur Regelung der Brenngasmenge (4, 5) derartig ansteuert, dass der Brenngasstrom unterbrochen wird.

**Claims**

**1.** Method for controlling a gas burner (1), in particular with a fan (2), comprising an electronic controller (3), which, at a predefined burner output, defines a target signal for the amount of burnable gas and the amount of air, comprising a device for controlling the amount of burnable gas (4, 5), and comprising a waste gas sensor (6), which generates a signal equivalent to the carbon monoxide concentration or to the concentration of unburned hydrocarbons, **characterised in that**, after a specific operating time or at periodic intervals, preferably burner start-up or absolute time, a calibration procedure is carried out, in which the burnable gas/air mixture is made richer or leaner until the signal of the waste gas sensor (6) or a gradient of this signal, preferably derived according to the fan speed or the control signal of the device for controlling the amount of burnable gas (4, 5), exceeds a predefined or calculated threshold value, whereby it is known that a specific air ratio is present, in which state the signal for the amount of burnable gas and the amount of air is detected and then the burnable gas/air mixture is again made leaner or richer at a predefined ratio, whereby new target values for the amount of burnable gas and amount of air are defined.

**2.** Method for controlling a gas burner (1) according to claim 1, **characterised in that** the burnable gas/air mixture is made richer and/or leaner by changing the control signal for the amount of burnable gas.

**3.** Method for controlling a gas burner (1) according to one of claims 1 or 2, **characterised in that** the burnable gas/air mixture is made richer and/or leaner by changing the control signal for the amount of air.

**4.** Method for controlling a gas burner (1) according to one of claims 1 to 3, **characterised in that** the calibration procedure is initiated if the signal equivalent to the carbon monoxide concentration or to the hydrocarbon concentration lies above a predefined threshold value during operation of the gas burner at least 15 seconds after burner start-up.

**5.** Method for controlling a gas burner (1) according to one of claims 1 to 4, **characterised in that** target values for burnable gas and air are predefined at the start of the control method (3).

**6.** Method for controlling a gas burner (1) according to one of claims 1 to 5, **characterised in that** the signal equivalent to the carbon monoxide concentration or to the concentration of unburned hydrocarbons is detected before burner start-up, preferably at least 5 seconds after fan start-up, and the calibration procedure is not initiated with the presence of a signal corresponding to a concentration preferably greater than 20 ppm.

**7.** Method for controlling a gas burner (1) according to one of claims 1 to 6, **characterised in that**, once the burnable gas feed has been disconnected, preferably after a short measurement break, preferably 1 second, the signal equivalent to the carbon monoxide concentration or to the concentration of unburned hydrocarbons is detected, and the calibration procedure is not initiated with the presence of a signal corresponding to a concentration preferably greater than 20 ppm.

**8.** Method for controlling a gas burner (1) according to one of claims 1 to 7, **characterised in that**, with the presence of a signal of the waste gas sensor (6) below a predefined threshold value, preferably 10 mV, or above another predefined threshold value, preferably 1 V, or with the presence of a gradient of this signal greater than a third threshold value, preferably 100 mV/sec, the calibration procedure is not initiated and the controller (3) controls the gas burner (1) using predefined standard values or values established in a prior calibration procedure, or the controller (3) disconnects the gas burner (1).

**9.** Method for controlling a gas burner (1) according to one of claims 1 to 8, **characterised in that**, in addition, the ionisation current is received at an ionisation electrode (14) located in the flame region, and, if the ionisation current increases in the case of a fuelrich burnable gas/air mixture whilst the signal equivalent to carbon monoxide or to hydrocarbon decreases, the calibration procedure is aborted.

10. Method for controlling a gas burner (1) according to claim 9, **characterised in that** the burner (1) is disconnected.

11. Method for controlling a gas burner (1) according to one of claims 1 to 10, **characterised in that**, in addition, the ionisation current is received at an ionisation electrode (14) located in the flame region, and, if the ionisation current decreases in the case of a fuelrich burnable gas/air mixture whilst the threshold value for the signal equivalent to carbon monoxide or to hydrocarbon is not reached, the calibration procedure is aborted.

12. Method for controlling a gas burner (1) according to claim 9 or 11, **characterised in that** the controller (3) controls the device for controlling the amount of burnable gas (4, 5), in such a way that the flow of burnable gas is interrupted

## Revendications

1. Méthode de contrôle d'un brûleur à gaz (1), notamment avec un ventilateur (2), comprenant un régulateur électronique (3), qui définit un signal cible pour la quantité de gaz combustible et la quantité d'air à une sortie de brûleur prédéfinie, comprenant un appareil pour contrôler la quantité de gaz combustible (4, 5), et comprenant un capteur de gaz de combustion (6), qui génère un signal équivalent à la concentration en monoxyde de carbone ou à la concentration en hydrocarbures non brûlés, **caractérisée en ce que**, après un temps de fonctionnement spécifique ou à des intervalles périodiques, de préférence le démarrage du brûleur ou un temps absolu, une procédure d'étalonnage est effectuée, dans laquelle le mélange d'air et gaz combustible est enrichi ou appauvri jusqu'au signal du capteur de gaz de combustion (6) ou un gradient dudit signal, de préférence dérivé selon la vitesse du ventilateur ou le signal de contrôle de l'appareil pour réguler la quantité de gaz combustible (4, 5), excède une valeur seuil prédéfinie ou calculée, par laquelle il est connu qu'un rapport d'air spécifique est présent, état dans lequel le signal de la quantité de gaz combustible et la quantité d'air sont détectés, puis le mélange d'air et de gaz est à nouveau enrichi ou appauvri selon un rapport prédéfini, dans lequel les nouvelles valeurs cibles de la quantité de gaz combustible et la quantité d'air sont définies.

2. Méthode de contrôle d'un brûleur à gaz (1) selon la revendication 1, **caractérisée en ce que** le mélange d'air et de gaz combustible est enrichi et/ou appauvri par modification du signal de contrôle de la quantité de gaz combustible.

3. Méthode de contrôle d'un brûleur à gaz (1) selon l'une des revendications 1 ou 2, **caractérisée en ce que** le mélange d'air et de gaz combustible est enrichi et/ou appauvri par modification du signal de contrôle de la quantité d'air.

4. Méthode de contrôle d'un brûleur à gaz (1) selon l'une des revendications 1 à 3, **caractérisée en ce que** la procédure d'étalonnage est initiée si le signal équivalent à la concentration en monoxyde de carbone ou à la concentration en hydrocarbures se situe au-dessus d'une valeur seuil prédéfinie pendant le fonctionnement du brûleur à gaz au moins 15 secondes après le démarrage du brûleur.

5. Méthode de contrôle d'un brûleur à gaz (1) selon l'une des revendications 1 à 4, **caractérisée en ce que** les valeurs cibles de l'air et du gaz combustible sont prédéfinies au début de la méthode de contrôle (3).

6. Méthode de contrôle d'un brûleur à gaz (1) selon l'une des revendications 1 à 5, **caractérisée en ce que** le signal équivalent à la concentration en monoxyde de carbone ou à la concentration en hydrocarbures non brûlés est détecté avant le démarrage du brûleur, de préférence au moins 5 secondes après le démarrage du ventilateur, et la procédure d'étalonnage n'est pas initiée avec la présence d'un signal correspondant à une concentration de préférence supérieure à 20 ppm.

7. Méthode de contrôle d'un brûleur à gaz (1) selon l'une des revendications 1 à 6, **caractérisée en ce que**, une fois que l'alimentation en gaz combustible a été déconnectée, de préférence après une courte pause de mesure, de préférence 1 seconde, le signal équivalent à la concentration en monoxyde de carbone ou à la concentration en hydrocarbures non brûlés est détecté, et la procédure d'étalonnage n'est pas initiée avec la présence d'un signal correspondant à une concentration de préférence supérieure à 20 ppm.

8. Méthode de contrôle d'un brûleur à gaz (1) selon l'une des revendications 1 à 7, **caractérisée en ce que**, avec la présence d'un signal du capteur de gaz de combustion (6) inférieur à une valeur seuil prédéfinie, de préférence 10 mV, ou supérieure à une autre valeur prédéfinie, de préférence 1 V, ou avec la présence d'un gradient de ce signal supérieur à une troisième valeur seuil, de préférence 100 mV/sec, la procédure d'étalonnage n'est pas initiée et le régulateur (3) contrôle le brûleur à gaz (1) à l'aide des valeurs standards prédéfinies ou de valeurs établies lors d'une procédure d'étalonnage antérieure, ou le régulateur (3) déconnecte le brûleur à gaz (1).

9.  Méthode de contrôle d'un brûleur à gaz (1) selon l'une des revendications 1 à 8, **caractérisée en ce que**, en outre, le courant d'ionisation est reçu à une électrode d'ionisation (14) située dans la région de la flamme, et, si le courant d'ionisation augmente dans le cas d'un mélange d'air et gaz combustible riche en combustible alors que le signal équivalent au monoxyde de carbone ou aux hydrocarbures diminue, la procédure d'étalonnage est annulée.

10. Méthode de contrôle d'un brûleur à gaz (1) selon la revendication 9, **caractérisée en ce que** le brûleur (1) est déconnecté.

11. Méthode de contrôle d'un brûleur à gaz (1) selon l'une des revendications 1 à 10, **caractérisée en ce que**, en outre, le courant d'ionisation est reçu à une électrode d'ionisation (14) située dans la région de la flamme, et, si le courant d'ionisation diminue dans le cas d'un mélange d'air et gaz combustible riche en combustible alors que la valeur seuil équivalente au monoxyde de carbone ou aux hydrocarbures n'est pas atteinte, la procédure d'étalonnage est annulée.

12. Méthode de contrôle d'un brûleur à gaz (1) selon l'une des revendications 9 ou 11, **caractérisée en ce que** le régulateur (3) contrôle l'appareil de contrôle de la quantité de gaz combustible (4, 5), de sorte que l'écoulement du gaz combustible est interrompu.

EP 1 331 444 B1

**Fig. 1**

Vaillant GmbH

Fig. 2

Vaillant GmbH          EP 4039/2

EP 1 331 444 B1

EP 1 331 444 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 770824 B1
- DE 19539568 C1
- EP 833106 A
- US 5190454 A